# EUROPEAN PATENT APPLICATION

(11) **EP 2 023 499 A1**
(43) Date of publication of application: **11.02.2009**
(21) Application number: 07743160.9
(22) Date of filing: 11.05.2007
(51) Int. Cl.: H04B 1/40, H01Q 1/38, H01Q 9/04, H01Q 21/30, H04B 1/38

(54) **INFORMATION TERMINAL**

(30) Priority: 30.05.2006 JP 2006150203
(71) Applicant: Murata Manufacturing Co. Ltd., Nagaokakyo-shi, Kyoto 617-8555 (JP)
(72) Inventor: KATO, Noboru, Nagaokakyo-shi, Kyoto 617-8555 (JP); MANDAI, Harufumi, Nagaokakyo-shi, Kyoto 617-8555 (JP); KIMURA, Ikuhei, Nagaokakyo-shi, Kyoto 617-8555 (JP)
(74) Representative: Schenk, Markus
(86) International application number: PCT/JP2007/059725
(87) International publication number: WO 2007/138836

(57) **Abstract**

An information terminal device that can support almost all of the frequency bands of a plurality of radio systems is provided.

The information terminal device includes a casing, a wireless board (110A), and one of an antenna (1A) and an antenna (1B) so as to employ a plurality of radio systems. One of the antenna (1A) and the antenna (1B) includes a power feeding terminal and a plurality of resonant circuits. The plurality of resonant circuits are used for radiating radio waves. The plurality of resonant circuits are further used for a matching circuit that provides impedance matching between an impedance on a power feeding side as viewed from the power feeding terminal (50 Ω) and a radiation impedance of a free space (377 Ω).

## Description

### Technical Field

The present invention relates to an information terminal device, such as a notebook personal computer that employs a plurality of radio systems.

### Background Art

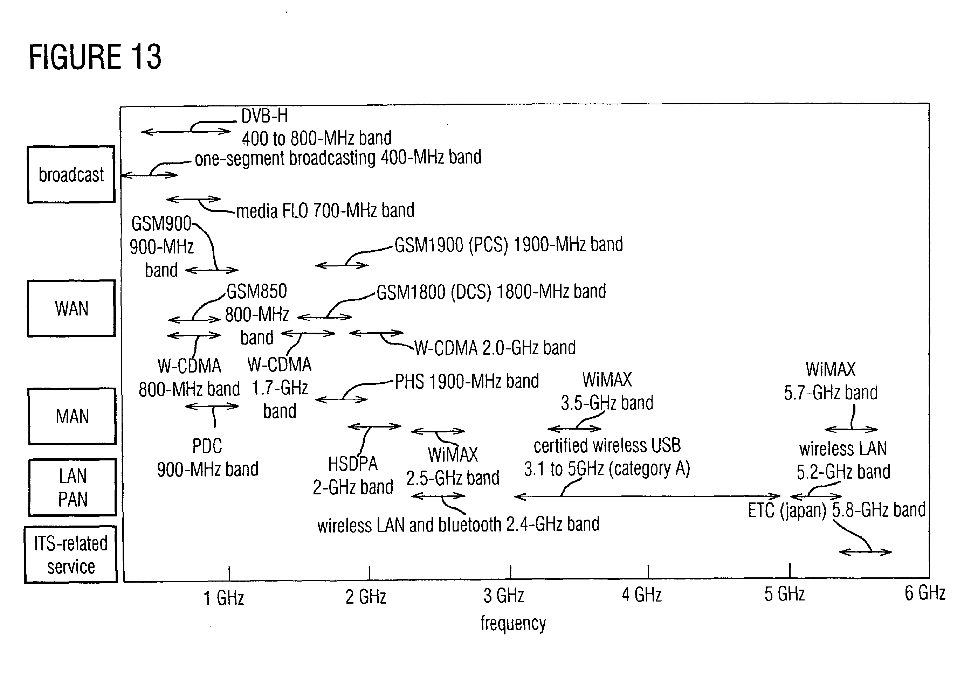

In recent years, wireless services for mobile devices and motor vehicles have been increasingly provided. Examples of such services include Wideband-Code Division Multiple Access (W-CDMA), Global System for Mobile communications (GSM), a wireless Local Area Network (LAN), digital television broadcast, and Worldwide interoperability for Microwave Access (WiMAX). As shown in Fig. 13, frequencies in a wide band from 400 MHz to higher than 5 GHz are used for these services.

Nowadays, information terminal devices that employ a combination of a PHS and a wireless LAN, information terminal devices that employ a combination of W-CDMA, GSM in three frequency bands, a wireless LAN, and DVB-H, and information terminal devices that employ a combination of mobile WiMAX and S-DMB are available. However, such information terminal devices only use some of the radio systems shown in Fig. 13. This is because when a large number of radio systems are employed, the wireless frequencies used range from about 400 MHz to about 6 GHz, and therefore, it is difficult for one compact antenna to support such a wide frequency range. One solution is to use a big antenna. However, if a big antenna is used, the sizes of information terminal devices become too large, thereby deteriorating their portability.

On the other hand, in order to support a plurality of radio systems, Patent Document 1 describes a wireless communication card having desired antennae capable of being mounted in an extension slot of an information terminal device. However, this wireless communication card requires an RF circuit unit needed for wireless communication and an antenna that covers a radio frequency range in use. Thus, the size of the wireless communication card is increased, and therefore, the size of the information terminal device is increased. In addition, the antenna protruding from the wireless communication card is easily damaged, and the protruding antenna spoils the aesthetic appearance of the information terminal device.

In addition, Patent Document 2 describes a mobile information terminal device including a wireless communication module and an antenna that allow use of a desired radio system. However, even in such an information terminal device, if a new radio system is employed, a wireless communication card with an antenna for the new radio system is required. Thus, a problem similar to the problem of the device described in Patent Document 1 arises.
[Patent Document 1] Japanese Unexamined Patent Application Publication No. 8-279027
[Patent Document 2] Japanese Unexamined Patent Application Publication No. 2002-297262

### Disclosure of Invention

### Problems to be Solved by the Invention

Accordingly, the present invention provides an information terminal device including an antenna capable of supporting almost all frequency ranges used for a plurality of radio systems.

### Means for Solving the Problems

According to the present invention, an information terminal device for supporting a plurality of radio systems includes a chassis, a wireless board, and an antenna. The antenna includes a power feeding terminal and a plurality of resonant circuits. The plurality of resonant circuits are used for radiating radio waves. The plurality of resonant circuits are further used for a matching circuit for providing impedance matching between an impedance on a power feeding side as viewed from the power feeding terminal and a radiation impedance of a free space.

In the information terminal device according to the present invention, by using an inductance component of the plurality of resonant circuits for the inductance of a matching circuit, the incorporated antenna can provide impedance matching between the impedance of a device connected to the power feeding terminal (typically, 50 Ω) and the impedance of a space (377 Ω) in a substantially wide frequency range. The antenna can be small and can support a wide frequency range. Thus, a single antenna can support almost all frequency ranges of a plurality of radio systems. In addition, the antenna can be of a surface-mounted type.

In the information terminal device according to the present invention, the plurality of resonant circuits can include a plurality of inductance elements and a plurality of capacitance elements, and at least one of the plurality of inductance elements can be used for radiating radio waves. Accordingly, the need for a radiating member other than the resonant circuits can be eliminated.

The information terminal device can include an extension slot electrically connected to the antenna. A wireless communication card can be mounted in the extension slot, and wireless communication can be performed using the antenna. In this way, the antenna does not protrude from the wireless communication card, and therefore, damage of the antenna can be reliably prevented, and the antenna does not spoil the aesthetic appearance of the information terminal device.

In addition, the wireless board can include RF circuit units supporting a plurality of different radio systems. If the wireless board supports a plurality of radio systems, the number of extension slots required when a new radio system is supported can be reduced.

In addition, the wireless communication card can use one of the RF circuit units of a radio system corresponding to the wireless board. Thus, the need for an RF circuit unit in the wireless communication card can be eliminated. Accordingly, the size of the wireless communication card can be further reduced.

In addition, the radio system corresponding to the wireless communication card can be different from the radio system corresponding to the wireless board. In this way, a new radio system that is not supported by the wireless board can be easily used.

### Advantages

According to the present invention, since a compact and a wide band antenna is provided, a plurality of radio systems can be used by simply inserting a wireless communication card without an antenna into an extension slot. In addition, since the wireless communication card need not include an antenna, the size of the card can be reduced, and therefore, the size of the information terminal device can be reduced. Furthermore, since the antenna does not protrude from the wireless communication card, the antenna is not damaged, and the antenna does not spoil the aesthetic appearance of the information terminal device.

### Brief Description of Drawings

[Fig. 1] Fig. 1 is an equivalent circuit diagram of a first example of an antenna used for an information terminal device according to the present invention.
[Fig. 2] Fig. 2 is a plan view of the lamination structure of the first example of the antenna.
[Fig. 3] Fig. 3 is an external perspective view of the first example of the antenna.
[Fig. 4] Fig. 4 is a graph illustrating a reflection characteristic of the first example of the antenna.
[Fig. 5] Fig. 5 is an equivalent circuit diagram of a second example of an antenna.
[Fig. 6] Fig. 6 is a plan view of the lamination structure of the second example of the antenna.
[Fig. 7] Fig. 7 is a graph illustrating the reflection characteristic the second example of the antenna.
[Fig. 8] Fig. 8 is a perspective view of an exemplary information terminal device according to the present invention.
[Fig. 9] Fig. 9 is a block diagram of a wireless board of the information terminal device according to a first embodiment of the present invention.
[Fig. 10] Fig. 10 is a block diagram of a wireless communication card used in the first embodiment.
[Fig. 11] Fig. 11 is a block diagram of a wireless board of the information terminal device according to a second embodiment of the present invention.
[Fig. 12] Fig. 12 is a block diagram of a wireless communication card used in the second embodiment.
[Fig. 13] Fig. 13 illustrates the frequencies used for existing radio systems.

### Best Modes for Carrying Out the Invention

Embodiments of an information terminal device of the present invention are described below with reference to the accompanying drawings.

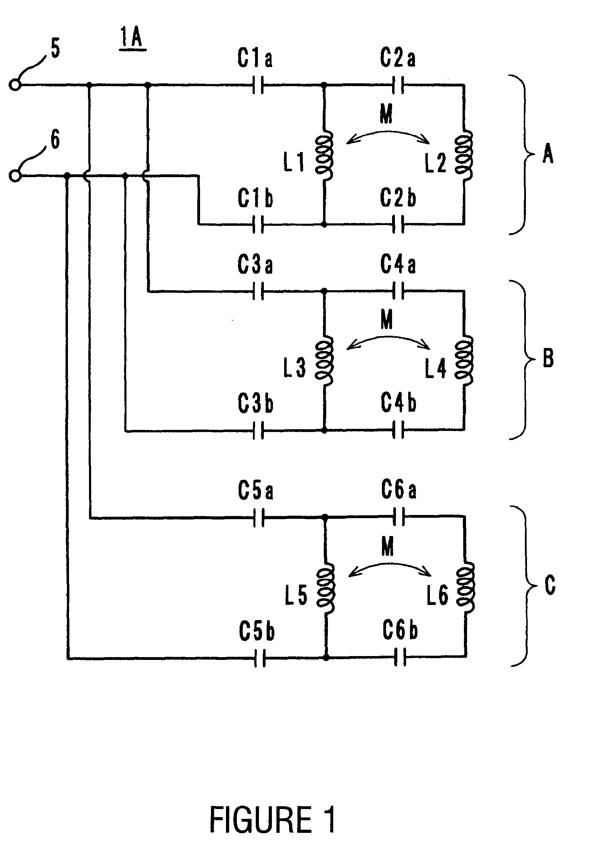

### (First Example of Antenna, Refer to Figs. 1 to 4)

A first example of a compact wide-band antenna used for an information terminal device according to the present invention is first described. As shown by an equivalent circuit in Fig. 1, an antenna 1A includes blocks A, B, and C, each including two LC series resonant circuits. The two LC series resonant circuits included in the block A include inductance elements L1 and L2 that are magnetically coupled (shown by a reference symbol M). The two LC series resonant circuits included in the block B include inductance elements L3 and L4 that are magnetically coupled (shown by a reference symbol M). The two LC series resonant circuits included in the block C include inductance elements L5 and L6 that are magnetically coupled (shown by a reference symbol M). The inductance elements L1, L3, and L5 are connected to power feeding terminals 5 and 6 via a pair of capacitance elements C1a and C1b, a pair of capacitance elements C3a and C3b, and a pair of capacitance elements C5a and C5b, respectively. In addition, the inductance elements L1, L3, and L5 are connected in parallel to the inductance elements L2, L4, and L6 via a pair of capacitance elements C2a and C2b, a pair of capacitance elements C4a and C4b, and a pair of capacitance elements C6a and C6b, respectively. That is, the block A includes the LC series resonant circuit including the inductance element L1 and the capacitance elements C1a and C1b and the LC series resonant circuit including the inductance element L2 and the capacitance elements C2a and C2b. The block B includes the LC series resonant circuit including the inductance element L3 and the capacitance elements C3a and C3b and the LC series resonant circuit including the inductance element L4 and the capacitance elements C4a and C4b. The block C includes the LC series resonant circuit including the inductance element L5 and the capacitance elements C5a and C5b and the LC series resonant circuit including the inductance element L6 and the capacitance elements C6a and C6b.

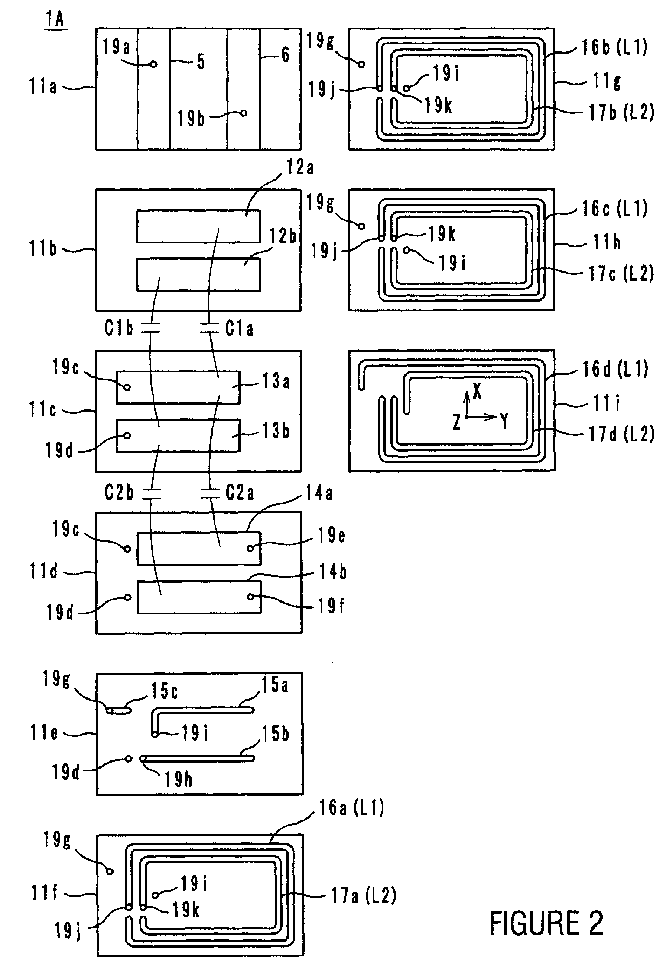

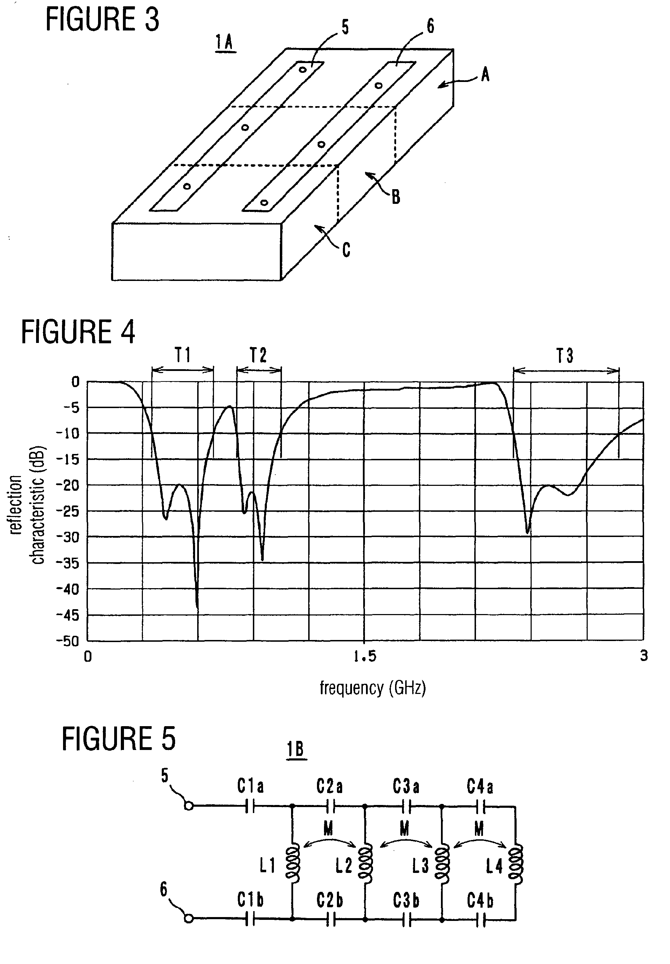

In the antenna 1A, layers shown by plan views in Fig. 2 are stacked so as to form each of the blocks A, B, and C, which are arranged as shown by an external perspective view in Fig. 3. The LC series resonant circuits in each of the blocks A, B, and C are connected to the common power feeding terminals 5 and 6.

Each of the blocks A, B, and C is formed by, for example, the laminate structure shown in Fig. 2. Ceramic sheets 11a to 11i formed from a dielectric material are stacked, pressed, and sintered. Thus, each of the blocks A, B, and C is formed. That is, the power feeding terminals 5 and 6 and via hole conductors 19a and 19b are formed in the ceramic sheet 11a. Capacitor electrodes 12a and 12b are formed in the ceramic sheet 11b. Capacitor electrodes 13a and 13b and via hole conductors 19c and 19d are formed in the ceramic sheet 11c. Capacitor electrodes 14a and 14b and the via hole conductors 19c and 19d, and via hole conductors 19e and 19f are formed in the ceramic sheet 11d.

In addition, connection conductor patterns 15a, 15b, and 15c, the via hole conductors 19d, and via hole conductors 19g, 19h, and 19i are formed in the ceramic sheet 11e. Conductor patterns 16a and 17a, the via hole conductors 19g and 19i, and via hole conductors 19j and 19k are formed in the ceramic sheet 11f. Conductor patterns 16b and 17b and the via hole conductors 19g, 19i, 19j, and 19k are formed in the ceramic sheet 11g. Conductor patterns 16c and 17c and the via hole conductors 19g, 19i, 19j, and 19k are formed in the ceramic sheet 11h. Furthermore, conductor patterns 16d and 17d are formed in the ceramic sheet 11i.

By laminating the above-described ceramic sheets 11a to 11i, the conductor patterns 16a to 16d are connected together via the via hole conductor 19j. Thus, the inductance element L1 (L3, L5) is formed. Similarly, the conductor patterns 17a to 17d are connected together via the via hole conductor 19k. Thus, the inductance element L2 (L4, L6) is formed. The capacitance element C1a (C3a, C5a) is formed from the electrodes 12a and 13a. The capacitance element C1b (C3b, C5b) is formed from the electrodes 12b and 13b. In addition, the capacitance element C2a (C4a, C6a) is formed from the electrodes 13a and 14a. The capacitance element C2b (C4b, C6b) is formed from the electrodes 13b and 14b.

One end of the inductance element L1 (L3, L5) is connected to the capacitor electrode 13a via the via hole conductor 19g, the connection conductor pattern 15c, and the via hole conductor 19c, while the other end is connected to the capacitor electrode 13b via the via hole conductor 19d. One end of the inductance element L2 (L4, L6) is connected to the capacitor electrode 14a via the via hole conductor 19i, the connection conductor pattern 15a, and the via hole conductor 19e, while the other end is connected to the capacitor electrode 14b via the via hole conductor 19h, the connection conductor pattern 15b, and the via hole conductor 19f.

In addition, the power feeding terminal 5 is connected to the capacitor electrode 12a via the via hole conductor 19a. The power feeding terminal 6 is connected to the capacitor electrode 12b via the via hole conductor 19b.

In the antenna 1A having such a structure, each of the LC series resonant circuit including the inductance elements L1 and L2 mutually magnetically coupled, the LC series resonant circuit including the inductance elements L3 and L4 mutually magnetically coupled, and the LC series resonant circuit including the inductance elements L5 and L6 mutually magnetically coupled resonates so as to function as a radiation element. In addition, since every two neighboring inductance elements are coupled via the capacitance elements, the inductance elements function as a matching circuit between the impedance of a device connected to the power feeding terminals 5 and 6 (typically 50 Ω) and the impedance of a space (377 Ω).

A coupling coefficient k1 between the neighboring inductance elements L1 and L2, a coupling coefficient k2 between the neighboring inductance elements L3 and L4, and a coupling coefficient k3 between the neighboring inductance elements L5 and L6 are expressed as follows: k1 = M/√(L1 × L2), k2 = M/√ (L3 × L4), and k3 = M/√ (L5 × L6). It is desirable that each of these coupling coefficients is 0.1 or higher. In this first example, k1 is about 0.55, k2 is about 0.85, and k3 is about 0.85.

In addition, since each of the LC resonant circuits including the capacitance elements and the inductance element is configured so as to function as a lumped constant resonant circuit, the LC resonant circuit can be of a lamination type, and therefore, the size of the LC resonant circuit can be reduced. Furthermore, the antenna 1A remains mostly unaffected by another device. Still furthermore, since capacitance elements are connected to the power feeding terminals 5 and 6, low-frequency surge can be cut, and therefore, the device can be protected from surge.

Yet still furthermore, since a plurality of LC series resonant circuits are formed using a lamination substrate, a compact wide-band antenna that can be surface-mounted on a substrate of, for example, a cell phone can be realized. Accordingly, as described below with reference to the following embodiment, the antenna can be used for a variety of wireless communication systems.

Fig. 4 illustrates a graph of a result of a simulation performed by the present inventors on the basis of the equivalent circuit shown in Fig. 1. As can be seen from the graph, a reflection characteristic of -10 dB or more can be obtained in three frequency ranges T1, T2, and T3. The range T1 corresponds to a UHF television band. The range T2 corresponds to a GSM band. The range T3 corresponds to a wireless LAN band.

### (Second Example of Antenna, Refer to Figs. 5 to 7)

According to a second example, as shown by an equivalent circuit in Fig. 5, an antenna 1B includes inductance elements L1, L2, L3, and L4, where every two neighboring inductance elements are magnetically coupled (as indicated by a reference symbol M). The inductance element L1 is connected to power feeding terminals 5 and 6 via capacitance elements C1a and C1b. In addition, the inductance element L2 is connected in parallel to the inductance element L1 via capacitance elements C2a and C2b. The inductance element L3 is connected in parallel to the inductance element L2 via capacitance elements C3a and C3b. The inductance element L4 is connected in parallel to the inductance element L3 via capacitance elements C4a and C4b. That is, this resonant circuit includes an LC series resonant circuit including the inductance element L1 and the capacitance elements C1a and C1b, an LC series resonant circuit including the inductance element L2 and the capacitance elements C2a and C2b, an LC series resonant circuit including the inductance element L3 and the capacitance elements C3a and C3b, and an LC series resonant circuit including the inductance element L4 and the capacitance elements C4a and C4b.

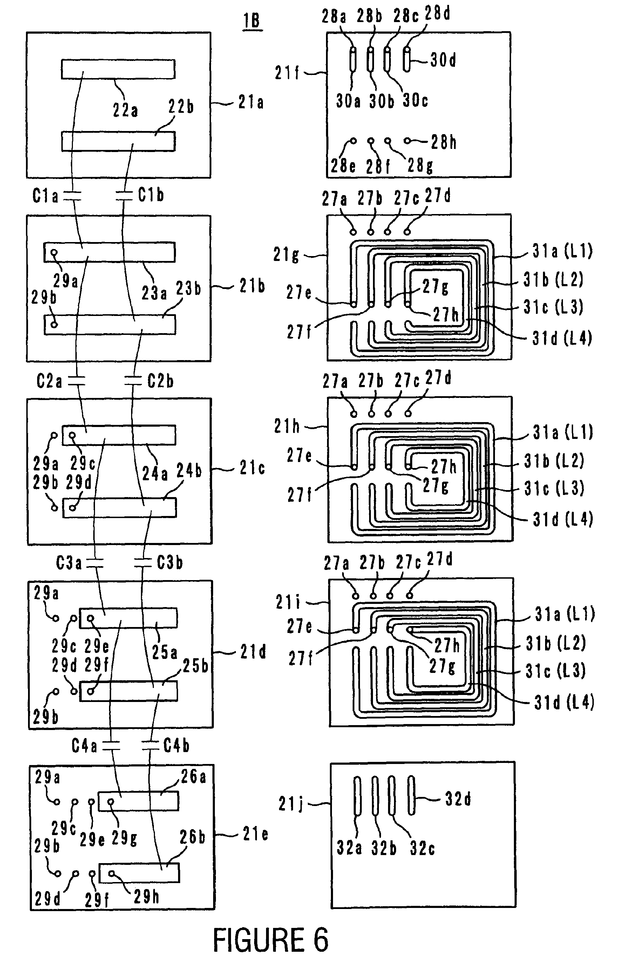

The antenna 1B having such a circuit configuration has a lamination structure shown by, for example, plan views of Fig. 6. Ceramic sheets 21a to 21j formed from a dielectric material are stacked, pressed, and sintered. That is, capacitor electrodes 22a and 22b that function as the power feeding terminals 5 and 6 as well are formed in the sheet 21a. Capacitor electrodes 23a and 23b and via hole conductors 29a and 29b are formed in the sheet 21b. Capacitor electrodes 24a and 24b and via hole conductors 29a to 29d are formed in the sheet 21c. Capacitor electrodes 25a and 25b and the via hole conductors 29a to 29d, and via hole conductors 29e and 29f are formed in the sheet 21d. Capacitor electrodes 26a and 26b and the via hole conductors 29a to 29f, and via hole conductors 29g and 29h are formed in the sheet 21e.

In addition, connection conductor patterns 30a to 30d and via hole conductors 28a to 28h are formed in the sheet 21f. Conductor patterns 31a to 31d and via hole conductors 27a to 27h are formed in the sheet 21g. The conductor patterns 31a and 31d and the via hole conductors 27a to 27h are formed in the sheet 21h. The conductor patterns 31a and 31d and the via hole conductors 27a to 27h are formed in the sheet 21i. Furthermore, connection conductor patterns 32a to 32d are formed in the sheet 21j.

By laminating the above-described sheets 21a to 21j, the conductor patterns 31a to 31d are connected together via the via hole conductors 27e to 27h. Thus, the inductance elements L1 to L4 are formed. One end of the inductance element L1 is connected to the capacitor electrode 23a via the via hole conductor 27e, the connection conductor pattern 32a, the via hole conductors 27a and 28a, the connection conductor pattern 30a, and the via hole conductor 29a, while the other end is connected to the capacitor electrode 23b via the via hole conductors 28e and 29b. One end of the inductance element L2 is connected to the capacitor electrode 24a via the via hole conductor 27f, the connection conductor pattern 32b, the via hole conductors 27b and 28b, the connection conductor pattern 30b, and via hole conductor 29c, while the other end is connected to the capacitor electrode 24b via the via hole conductors 28f and 29d.

In addition, one end of the inductance element L3 is connected to the capacitor electrode 25a via the via hole conductor 27g, the connection conductor pattern 32c, the via hole conductors 27c and 28c, the connection conductor pattern 30c, and the via hole conductor 29e, while the other end is connected to the capacitor electrode 25b via the via hole conductors 28g and 29f. One end of the inductance element L4 is connected to the capacitor electrode 26a via the via hole conductor 27h, the connection conductor pattern 32d, the via hole conductors 27d and 28d, the connection conductor pattern 30d, and via hole conductor 29g, while the other end is connected to the capacitor electrode 26b via the via hole conductors 28h and 29h.

The capacitance element C1a includes the electrodes 22a and 23a. The capacitance element C1b includes the electrodes 22b and 23b. The capacitance element C2a includes the electrodes 23a and 24a. The capacitance element C2b includes the electrodes 23b and 24b. In addition, the capacitance element C3a includes the electrodes 24a and 25a. The capacitance element C3b includes the electrodes 24b and 25b. The capacitance element C4a includes the electrodes 25a and 26a. The capacitance element C4b includes the electrodes 25b and 26b.

In the antenna 1B having such a structure, each of the LC series resonant circuits including the inductance elements L1 to L4, where every two neighboring inductance elements are mutually magnetically coupled, resonates. Accordingly, each of the inductance elements L1 to L4 functions as a radiation element. In addition, since the inductance elements L1 to L4 are coupled via a pair of capacitance elements C2a and C2b, a pair of capacitance elements C3a and C3b, and a pair of capacitance elements C4a and C4b, the inductance elements function as a matching circuit between the impedance of a device connected to the power feeding terminals 5 and 6 (typically 50 Ω) and the impedance of a space (377 Ω).

A coupling coefficient k1 between the neighboring inductance elements L1 and L2, a coupling coefficient k2 between the neighboring inductance elements L2 and L3, and a coupling coefficient k3 between the neighboring inductance elements L3 and L4 are expressed as follows: k1 = M/√ (L1 × L2), k2 = M/√ (L2 × L3), and k3 = M/√ (L3 × L4). It is desirable that each of these coupling coefficients is 0.1 or higher. In this second example, k1 is about 0.7624, k2 is about 0.5750, and k3 is about 0.6627.

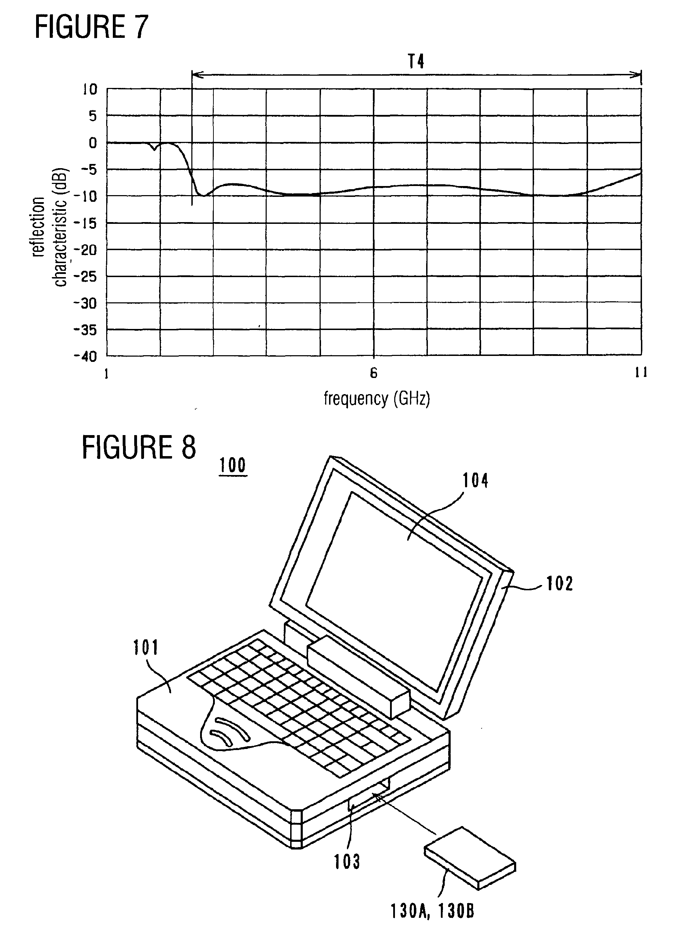

Fig. 7 illustrates a graph of a result of a simulation performed by the present inventors on the basis of the equivalent circuit shown in Fig. 5. As can be seen from the graph, in the antenna 1B, a reflection characteristic of -6 dB or more can be obtained in a significantly wide frequency range T4. The other operations and effects of the second example are the same as those of the first example.

### (Information Terminal Device, Refer to Fig. 8)

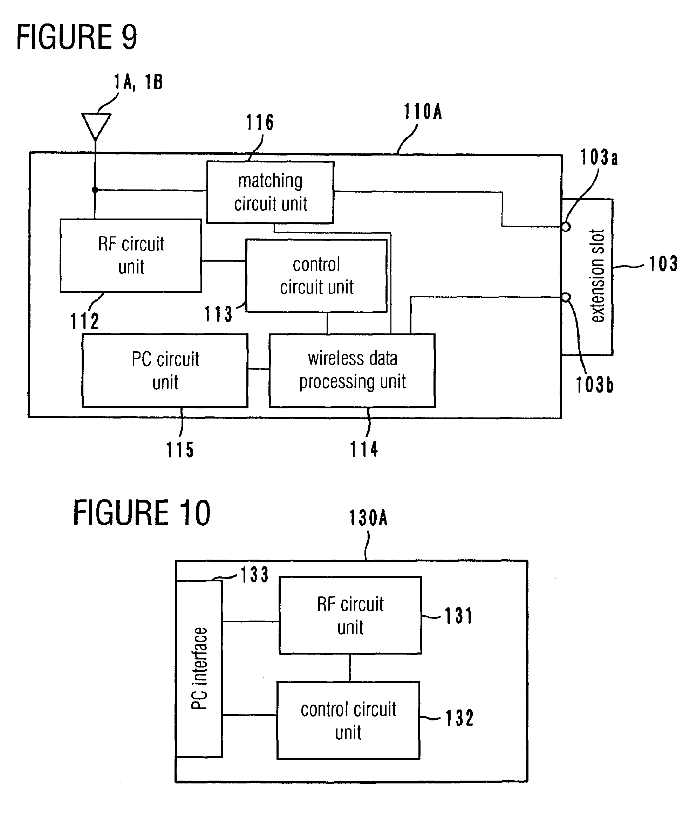

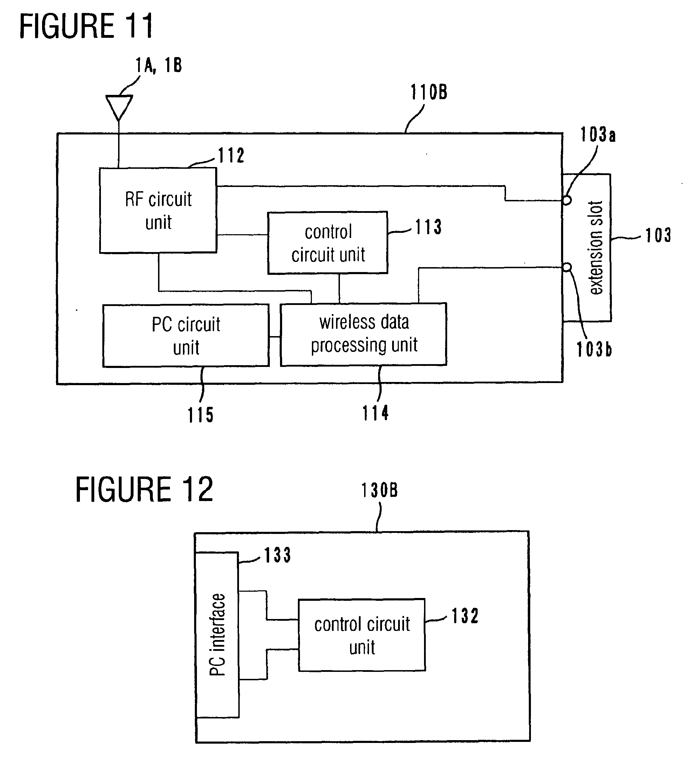

Fig. 8 illustrates an external view of an exemplary information terminal device according to the present invention. An information terminal device 100 is a mobile notebook personal computer. The information terminal device 100 includes a lower casing 101 and an openable upper casing 102. An operation section including an existing ten key number pad is disposed on the lower casing 101. The lower casing 101 further includes a wireless board 110A or 110B shown in block diagrams of Figs. 9 and 11. Still furthermore, the lower casing 101 includes an extension slot 103 used for mounting a wireless communication card 130A or 130B shown in block diagrams of Figs. 10 and 12. The upper casing 102 includes a liquid crystal display 104.

### (First Embodiment of Information Terminal Device, Refer to Figs. 9 and 10)

According to a first embodiment, the information terminal device includes the wireless board 110A, as shown in Fig. 9. As shown in Fig. 10, the wireless communication card 130A including an RF circuit unit 131 is mounted in the extension slot 103.

The wireless board 110A includes an RF circuit unit 112 connected to one of the antennae 1A and 1B, a control circuit unit 113, a wireless data processing unit 114, and a personal computer circuit unit 115. The wireless data processing unit 114 is connected to the personal computer circuit unit 115, the control circuit unit 113, and a matching circuit unit 116. The control circuit unit 113 is connected to the RF circuit unit 112.

The antenna 1A or 1B is further connected to a terminal 103a of the extension slot 103 via the matching circuit unit 116. A terminal 103b of the extension slot 103 is connected to the wireless data processing unit 114.

On the other hand, as shown in Fig. 10, the wireless communication card 130A includes the RF circuit unit 131, a control circuit unit 132, and a PC interface 133. The RF circuit unit 131 serves as a wireless system different from the RF circuit unit 112 of the personal computer.

The antenna 1A or 1B is shared by the RF circuit unit 112 of the notebook personal computer and the RF circuit unit 131 of the wireless communication card 130A mounted in the extension slot 103. That is, when the wireless communication card 130A is mounted in the extension slot 103, connection information is sent to the wireless data processing unit 114. The matching circuit unit 116 provides impedance matching between the antenna 1A or 1B and the RF circuit unit 131 of the wireless communication card 130A on the basis of the connection information.

For example, the matching circuit unit 116 has a switching structure. When the wireless communication card 130A is not mounted in the extension slot 103, the antenna 1A or 1B is connected to a terminating resistor (having an impedance the same as the output impedance of the RF circuit unit 131 of the wireless communication card 130A). In contrast, when the wireless communication card 130A is mounted in the extension slot 103, a switch of the matching circuit unit 116 connects the antenna 1A or 1B to the RF circuit unit 131 of the wireless communication card 130A via the terminal 103a on the basis of the connection information received from the wireless data processing unit 114.

In the information terminal device according to the first embodiment, by providing a compact and wide-band antenna 1A or 1B and by simply mounting the wireless communication card 130A without an antenna in the extension slot 103, a plurality of radio systems can be used. In addition, since the wireless communication card 130A need not incorporate an antenna, the size of the card can be reduced, and therefore, the size of the information terminal device can be reduced. Furthermore, the antenna does not protrude from the wireless communication card, the possibility of damaging an antenna can be reduced. Still furthermore, the antenna does not spoil the aesthetic appearance of the information terminal device.

### (Second Embodiment of Information Terminal Device, Refer to Figs. 11 and 12)

According to a second embodiment, the information terminal device incorporates the wireless board 110B, as shown in Fig. 11. As shown in Fig. 12, the wireless communication card 130B without an RF circuit unit is mounted in the extension slot 103.

The wireless board 110B includes an RF circuit unit 112 connected to one of the antennae 1A and 1B, a control circuit unit 113, a wireless data processing unit 114, and a personal computer circuit unit 115. The wireless data processing unit 114 is connected to the personal computer circuit unit 115, the control circuit unit 113, and an RF circuit unit 112. The control circuit unit 113 is connected to the RF circuit unit 112.

The RF circuit unit 112 supports a plurality of radio systems to be used. The RF circuit unit 112 is connected to the terminal 103a of the extension slot 103. In addition, the terminal 103b of the extension slot 103 is connected to the wireless data processing unit 114.

On the other hand, as shown in Fig. 12, the wireless communication card 130B includes the control circuit unit 132 and a PC interface 133. The wireless communication card 130B does not include an RF circuit unit.

The antenna 1A or 1B is selectively connected to the personal computer circuit unit 115 or the wireless communication card 130B mounted in the extension slot 103 using the RF circuit unit 112 of the notebook personal computer. That is, when the wireless communication card 130B is mounted in the extension slot 103, connection information is sent to the personal computer circuit unit 115 via the wireless data processing unit 114. Thus, the radio system of the wireless communication card 130B is recognized. Thereafter, a switching circuit incorporated in the RF circuit unit 112 operates so that the RF circuit unit 112 corresponding to the recognized radio system is connected to the control circuit unit 132 of the wireless communication card 130B using the terminal 103a. In this way, connection between the wireless communication card 130B and the RF circuit unit 112 corresponding to the wireless communication card 130B is established.

The operations and effects of the information terminal device according to the second embodiment are the same as those of the first embodiment. In particular, if the RF circuit unit 112 supports a plurality of different radio systems, an extension slot need not be additionally provided each time a new radio system is supported. In addition, since an RF circuit unit is removed from the wireless communication card 130B, the size of the wireless communication card can be further reduced.

### (Other Embodiments)

It should be noted that the information terminal device according to the present invention is not limited to the above-described embodiments, but it is intended to embrace all such alternatives, a variety of modifications may be made within the spirit and broad scope of the present invention.

In particular, any configuration of the antenna can be employed. In the above-described first and second examples, the LC resonant circuit is formed from a lumped constant resonant circuit. However, the LC resonant circuit may be formed from a distributed constant resonant circuit. In addition, the resonant circuits that form an antenna may be of one of a variety of formats.

### Industrial Applicability

As described above, the present invention is useful for information terminal devices, such as notebook personal computers supporting a plurality of radio systems. In particular, the present invention is advantageous in that almost all of the frequency ranges of a plurality of radio systems can be supported.

## Claims

1. An information terminal device for supporting a plurality of radio systems, comprising:
a casing;
a wireless board; and
an antenna including a power feeding terminal and a plurality of resonant circuits, the plurality of resonant circuits being used for radiating radio waves;
wherein the plurality of resonant circuits are further used for a matching circuit for providing impedance matching between an impedance on a power feeding side as viewed from the power feeding terminal and a radiation impedance of a free space.

2. The information terminal device according to Claim 1,
wherein the plurality of resonant circuits include a plurality of inductance elements and a plurality of capacitance elements, and wherein at least one of the plurality of inductance elements is used for radiating radio waves.

3. The information terminal device according to Claim 1 or 2, further comprising:
an extension slot electrically connected to the antenna;
wherein a wireless communication card is mounted in the extension slot, and wireless communication is performed using the antenna.

4. The information terminal device according to any one of Claims 1 to 3, wherein the wireless board includes RF circuit units for a plurality of different radio systems.

5. The information terminal device according to Claim 3 or 4, wherein the wireless communication card uses one of the RF circuit units for a radio system corresponding to the wireless board.

6. The information terminal device according to Claim 3 or 4, wherein the radio system corresponding to the wireless communication card is different from a radio system corresponding to the wireless board.
